# EUROPEAN PATENT APPLICATION

(11) **EP 4 129 048 A1**
(43) Date of publication of application: **08.02.2023**
(21) Application number: 21775039.7
(22) Date of filing: 26.03.2021
(51) Int. Cl.: A01G 9/029, A01G 24/25, A01G 24/28, A01G 24/44

(54) **SEEDLING MAT**

(30) Priority: 27.03.2020 JP 2020058728; 25.03.2021 JP 2021052085
(71) Applicant: Yanmar Power Technology Co., Ltd., Osaka-shi Osaka 530-0013 (JP)
(72) Inventor: ISHIZAKI So, Osaka-shi, Osaka 530-0013 (JP); HIRAI Hironori, Okayama-shi, Okayama 702-8515 (JP); TAKEYAMA Tomohiro, Osaka-shi, Osaka 530-0013 (JP); SAKAGAITO Takayasu, Okayama-shi, Okayama 702-8515 (JP); OIDO Naoyuki, Okayama-shi, Okayama 702-8515 (JP)
(74) Representative: Dennemeyer & Associates S.A.
(86) International application number: PCT/JP2021/012944
(87) International publication number: WO 2021/193938

(57) **Abstract**

In a seedling mat (100), seeds SD are sown. The seedling mat (100) is provided with a seedbed part (1), and a plurality of seeding hole parts (3) for placing the seeds (SD). The seedbed part (1) has a first principal surface (F1) and a second principal surface (F2) facing one another. The seedbed part (1) is constituted by a material that allows for roots to grow. The plurality of seeding hole parts (3) are provided to the seedbed part (1). Each of the plurality of seeding hole parts (3) has a first hole section (31) and a second hole section (32). The first hole section (31) extends in a predetermined direction (D31) facing from the first principal surface (F1) of the seedbed part (1) towards the second principal surface (F2). The second hole section (32) is arranged at a location spaced more apart from the first principal surface (F1) of the seedbed part (1) than the first hole section (31). The second hole section (32) is linked to the first hole section (31). The hole width (d1) of the first hole section (31) is constant toward the predetermined direction (D31). The hole width (d2) of the second hole section (32) narrows toward the predetermined direction (D31).

## Description

### TECHNICAL FIELD

The present disclosure relates to a seedling mat.

### BACKGROUND ART

The seedling mat described in Patent Document 1 has a lower layer, an intermediate layer, and an upper layer. The upper layer has a plurality of seeding holes at predetermined intervals.

### CITATION LIST

### Patent Literature

Patent Literature 1: JP 2019-146537

### DISCLOSURE OF INVENTION

### PROBLEMS TO BE SOLVED BY THE INVENTION

However, in the raising seedling mat described in Patent Literature 1, the seeding holes (seeding hole parts) have a cylindrical or an inverted truncated conic shape.

When the seeding holes are cylindrical in shape, seeds may not be positioned at bottoms of the seeding holes when compared with a case where the seeding holes have an inverted truncated conic shape. For example, in one seeding hole, a seed may be located in a corner of a bottom of the seeding hole, and in another seeding hole, a seed may be located in a center of a bottom of the seeding hole. In other words, when the seeding holes are cylindrical in shape, positions of seeds at bottoms may vary in the plurality of seeding holes when compared with a case where the seeding holes have an inverted truncated conic shape.

When the seeding holes have an inverted truncated conic shape, upper openings of the seeding holes may be larger than a case where the seeding holes have a cylindrical shape. Therefore, intervals between the seeding holes adjacent to each other may become small. As a result, when the seeding holes have the inverted truncated conic shape, strength of the seedling mat may be reduced when compared to the case where the seeding holes have a cylindrical shape.

The present disclosure was made in consideration of the above problem, and its object is to provide a seedling mat that can improve precision of positions of seeds in the seeding hole parts while suppressing decrease in strength.

### MEANS FOR SOLVING THE PROBLEMS

According to an aspect of the present invention, seeds are sown in a seedling mat. The seedling mat includes a seedbed part and a plurality of seeding hole parts where the seeds are placed. The seedbed part has first and second principal surfaces that face each other. The seedbed part is formed of material that allows roots to grow. The plurality of seeding hole parts are provided in the seedbed part. Each of the seeding hole parts has a first hole section and a second hole section. The first hole section extends in a predetermined direction from the first principal surface of the seedbed part toward the second principal surface. The second hole section is located farther from the first principal surface of the seedbed part than the first hole section. The second hole section is connected to the first hole section. A hole width of the first hole section is constant in the predetermined direction. A hole width of the second hole section narrows in the predetermined direction.

### EFFECT OF THE INVENTION

The present invention can provide a seedling mat that can improve precision of positions of seeds in seeding hole parts while suppressing decrease in strength.

### BRIEF DESCRIPTION OF DRAWINGS

FIG. 1 is a perspective view of a seedling mat according to a first embodiment of the present invention.
FIG. 2(a) is an enlarged plan view of the seedling mat with a seeding hole part according to the first embodiment. FIG. 2(b) is a cross-sectional view taken along a line IIB to IIB of FIG. 2(a).
FIG. 3 is a perspective view illustrating a seedling mat according to a second embodiment of the present invention.
FIG. 4(a) is an enlarged plan view of the seedling mat with a seeding hole part according to the second embodiment. FIG. 4(b) is a cross-sectional view taken along a line IVB to IVB of FIG. 2(a).
FIG. 5 is a perspective view of a seedling mat according to a third embodiment of the present invention.
FIG. 6 is a perspective view of a back surface of the seedling mat according to the third embodiment.
FIG. 7(a) is an enlarged plan view of the seedling mat with a seeding hole part, a depression section, and a first through-hole section according to the third embodiment. FIG. 7(b) is a cross-sectional view taken along a line VIIB to VIIB of FIG. 7(a).
FIG. 8 is a plan view of a seedling mat according to a fourth embodiment of the present invention.
FIG. 9 is a cross-sectional view taken along a line IX to IX of FIG. 8.
FIG. 10 is a perspective view of a seedling mat according to a fifth embodiment of the present invention.
FIG. 11(a) is an enlarged plan view of the seedling mat with a seeding hole part and a depression section according to the fifth embodiment.
FIG. 11(b) is a cross-sectional view taken along a line XIB to XIB of FIG. 11(a).
FIG. 12(a) is an enlarged plan view of the seedling mat with a seeding hole part and a first through-hole section according to a sixth embodiment of the present invention. FIG. 12(b) is a cross-sectional view taken along a line XIIB to XIIB of FIG. 12(a).
FIG. 13(a) is an enlarged plan view of the seedling mat with a seeding hole part according to a seventh embodiment of the present invention. FIG. 12(b) is a cross-sectional view taken along a line XIIIB to XIIIB of FIG. 13(a).

### DESCRIPTION OF EMBODIMENTS

Embodiments of the present invention will be described hereinafter with reference to the accompanying drawings. Note that, in the drawings, the same reference signs are used for the same or equivalent components, and redundant descriptions are omitted. Furthermore, for facilitating understanding, X, Y, and Z axes of the three-dimensional Cartesian coordinate system are illustrated where appropriate. For example, the X and Y axes are substantially parallel to a horizontal direction, and the Z axis is substantially parallel to a vertical direction.

### First Embodiment

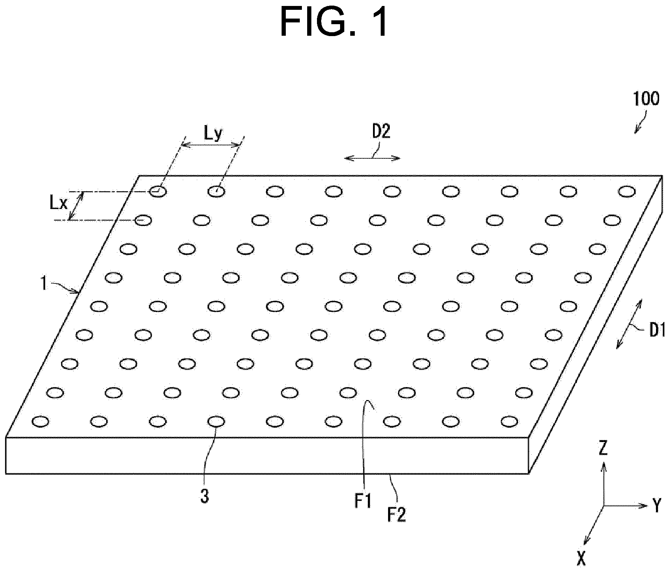

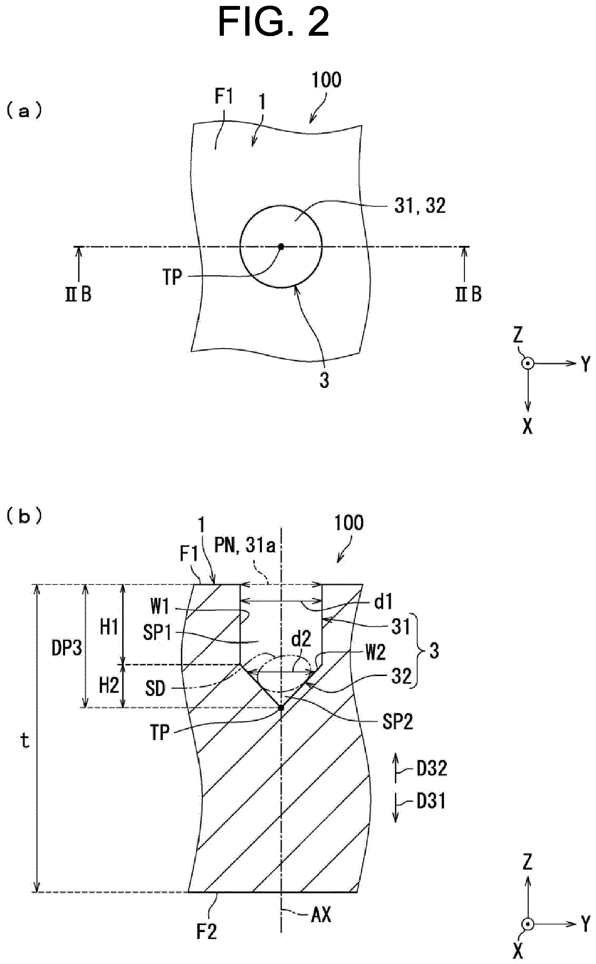

Referring to FIGS. 1 to 2(b), a seedling mat 100 according to a first embodiment of the present invention will be described.

First, the seedling mat 100 will be described with reference to FIG. 1. FIG. 1 is a perspective view of the seedling mat 100 according to the first embodiment. A plurality of seeds are sown in the seedling mat 100 shown in FIG. 1. The seeds are hereinafter referred to as "seeds SD". The seeds SD are, for example, vegetable seeds or paddy seeds. Seedlings grown from the seeds SD are scraped out of the seedling mat 100 by planting tines of a transplanting machine and planted in farmland by the transplanting machine. For example, the planting tines of the transplanting machine scrape out a portion of the seedling mat 100 into blocks, along with seedlings that have grown from the seeds SD.

In the example of FIG. 1, the seedling mat 100 has a substantially cuboid shape (e.g., a substantially rectangular flat plate shape). The seedling mat 100 includes a seedbed part 1 and a plurality of seeding hole parts 3. The seedbed part 1 has a substantially cuboid shape (e.g., a substantially rectangular flat plate shape). The seedbed part 1 has a first principal surface F1 and a second principal surface F2. The first and second principal surfaces F1 and F2 face each other and are substantially parallel to each other. For example, among a front surface and a back surface of the seedbed part 1, the first principal surface F1 corresponds to the front surface and the second principal surface F2 corresponds to the back surface.

The seedbed part 1 is made of material that allows roots of the seeds SD to grow. The seedbed part 1 includes at least organic fiber material, for example. Organic fiber material is fiber material composed of an organic matter. Examples of the organic fiber material include coco peat, peat moss, and rice husks. Alternatively, the seedbed part 1 may include binders, soil conditioners, fertilizers, and/or soil, for example.

A plurality of seeding hole parts 3 are provided in the seedbed part 1. Each of the plurality of seeding hole parts 3 is a hole for placing a seed SD. Therefore, the seeds SD are sown in the individual seeding hole parts 3.

In the example shown in FIG, 1, the plurality of seeding hole parts 3 are arranged in a substantially square grid or substantially rectangular grid. Specifically, two or more seeding hole parts 3 are arranged in a straight line in a first direction D1. The seeding hole parts 3 adjacent to each other in the first direction D1 are arranged with an interval Lx. Furthermore, two or more seeding hole parts 3 are arranged in a straight line in a second direction D2. The seeding hole parts 3 adjacent to each other in the second direction D2 are arranged with an interval Ly. The intervals Lx and Ly may be the same or different. The first direction D1 and the second direction D2 are substantially parallel to the first principal surface F1. The first direction D1 and the second direction D2 are substantially orthogonal to each other.

Next, the seeding hole parts 3 will be described with reference to FIGS. 2(a) and 2(b). FIG. 2(a) is an enlarged plan view of one of the seeding hole parts 3. FIG. 2(b) is a cross-sectional view taken along a line IIB to IIB of FIG. 2(a).

As shown in FIG. 2(b), each of the plurality of seeding hole parts 3 extends from the first principal surface F1 toward the second principal surface F2 of the seedbed part 1. Specifically, each of the plurality of seeding hole parts 3 extends from the first principal surface F1 of the seedbed part 1 in a predetermined direction D31. The predetermined direction D31 directs from the first principal surface F1 to the second principal surface F2 of the seedbed part 1. In the example of FIG. 2(b), the predetermined direction D31 is substantially orthogonal to the first principal surface F1 and the second principal surface F2. Therefore, the predetermined direction D31 is substantially orthogonal to the first direction D1 and the second direction D2 shown in FIG. 1.

Specifically, each of the seeding hole parts 3 has a first hole section 31 and a second hole section 32. The first hole section 31 extends from the first principal surface F1 of the seedbed part 1 in the predetermined direction D31. The second hole section 32 is located farther from the first principal surface F1 of the seedbed part 1 than the first hole section 31. The second hole section 32 is connected to the first hole section 31 at a tip end portion of the first hole section 31 in the predetermined direction D31. In other words, the second hole section 32 extends in the predetermined direction D31 from the tip end portion of the first hole section 31 in the predetermined direction D31. The second hole section 32 is tapered in the predetermined direction D31. In other words, a hole width d2 of the second hole section 32 narrows in the predetermined direction D31.

Therefore, according to the first embodiment, precision of positions of the seeds SD in the seeding hole parts 3 can be improved. For example, the positions of seeds SD in the plurality of seeding hole parts 3 can be prevented from being varied. When the precision of the positions of the seeds SD in the seeding hole parts 3 can be improved, precision of positions of seedlings grown from the seeds SD is also improved. Therefore, damage of the seedlings can be efficiently suppressed when the seedlings are scraped out by planting tines of a transplanting machine.

In addition, according to the first embodiment, the hole width d1 of the first hole section 31 is constant in the predetermined direction D31. Therefore, openings PN of the seeding hole parts 3 can be prevented from becoming excessively large. As a result, strength of the seedling mat 100 can be prevented from being reduced. In this specification, a concept of having the constant hole width d1 of the first hole section 31 includes having a substantially constant hole width d1. Furthermore, the openings PN of the seeding hole parts 3 correspond to openings 31a of the first hole sections 31 on a first principal surface F1 side.

Note that, when a seeding hole part as a reference example has only of the second hole section 32 without the first hole section 31, for example, the seeding hole part has a substantially inverted conic shape. Therefore, in the reference example, an opening of the seeding hole part may be excessively large. As a result, the strength of the seedling mat may be reduced in the reference example. Furthermore, when openings of the seeding hole parts are excessively large, the openings of the seeding hole parts adjacent to each other may come into contact with each other. As a result, the strength of the seedling mat may be further reduced.

As described above with reference to FIG. 2(b), according to the first embodiment, precision of the positions of the seeds SD in the seeding hole parts 3 can be improved while reduction of the strength of the seedling mat 100 is suppressed.

Next, the seeding hole parts 3 will be described with reference to FIG. 2(a) and FIG. 2(b). Each of the first hole sections 31 of the seeding hole parts 3 has a substantially columnar shape. Specifically, the first hole section 31 has a wall surface W1 and a space SP1 surrounded by the wall surface W1. The wall surface W1 is a substantially cylindrical surface. Therefore, the space SP1 has a substantially columnar shape. The first hole section 31 is linearly symmetrical with respect to an axis line AX of the seeding hole part 3. The axis line AX is parallel to the predetermined direction D31. In the example of FIG. 2(b), the axis line AX is a center line passing through a center of the seeding hole part 3. The axis line AX corresponds to an example of an "axis of symmetry".

In the examples of FIGS. 2(a) and 2(b), the first hole section 31 has a substantially cylindrical shape. Therefore, the wall surface W1 is a substantially cylindrical surface. Furthermore, the space SP1 has a substantially cylindrical shape. Note that the shape of the first hole section 31 is not limited as long as the hole width d1 of the first hole section 31 is constant in the predetermined direction D31. For example, the first hole section 31 may have a substantially prism shape, the wall surface W1 may be a substantially rectangular cylindrical surface, and the space SP1 may have a substantially prism shape. For example, a shape of the first hole section 31 in a plan view may be symmetrical or asymmetrical. The symmetrical shape is, for example, a substantially circle shape, a substantially polygon shape, or a substantially oval shape. In this specification, the plan view indicates viewing an object in the predetermined direction D31. The hole width d1 indicates a length of the first hole section 31 in a direction perpendicular to the predetermined direction D31. The hole width d1 is preferably larger than a smallest diameter of the seeds SD. For example, in elongated seeds SD (e.g. cucumber), even in a case where an inequality "(a smallest diameter of the seeds SD) < (the hole width d1) < (a largest diameter of the seeds SD)" is satisfied, the seeds SD can easily reach the second hole sections 32 through the first hole sections 31. For example, the hole width d1 may be larger than a largest diameter of the seeds SD. In this case also, the seeds SD can easily reach the second hole sections 32 through the first hole sections 31.

The second hole sections 32 have a substantially pyramidal shape. Specifically, the second hole section 32 has a wall surface W2 and a space SP2 surrounded by the wall surface W2. The wall surface W2 is a substantially conic surface. Therefore, the space SP1 has a substantially pyramidal shape. In particular, the second hole section 32 is preferably line symmetry with respect to the axis line AX. According to this preferred example, the seed SD can be precisely placed on the axis line AX. Note that the second hole section 32 may be asymmetric with respect to the axis line AX as long as the hole width d2 of the second hole section 32 narrows in the predetermined direction D31. In this case, for example, a position of a tip end portion TP of the second hole section 32 in the predetermined direction D31 is biased with respect to the axis line AX. Note that the hole width d2 indicates a length of the second hole section 32 in a direction perpendicular to the predetermined direction D31.

In the examples of FIGS. 2(a) and 2(b), the second hole section 32 has a substantially conic shape. Therefore, the wall surface W2 is a substantially conic surface. Furthermore, the space SP2 has a substantially conic shape. Note that the shape of the second hole section 32 is not particularly limited as long as the hole width d2 of the second hole section 32 narrows in the predetermined direction D31. For example, the second hole section 32 may have a substantially polygonal pyramidal shape, the wall surface W2 may be a substantially polygonal pyramidal surface, and the space SP2 may have a substantially polygonal pyramid shape. For example, the second hole section 32 may have a substantially frustum shape (e.g., a substantially truncated conic shape or a substantially truncated polygonal pyramidal shape), the wall surface W2 may have a substantially frustum surface (e.g., a substantially truncated conic surface or a substantially truncated pyramidal surface), and the space SP2 may have a substantially frustum shape (a substantially truncated conic shape or a substantially truncated polygonal pyramidal shape). For example, the second hole section 32 may have a substantially semispherical shape, the wall surface W2 may be a substantially semispherical surface, and the space SP2 may have a substantially semispherical shape. For example, a shape of the second hole section 32 in a plan view may be symmetrical or asymmetrical. The symmetrical shape is, for example, a substantially circle shape, a substantially polygon shape, or a substantially oval shape.

Note that, in the example of FIG. 2(b), a length H2 of the second hole section 32 in the predetermined direction D31 is shorter than a length H1 of the first hole section 31 in the predetermined direction D31. However, the length H2 may be equal to or larger than the length H1. The seeding hole parts 3 have a depth DP3 from the first principal surface F1. The depth DP3 is a sum of the length H1 and the length H2. In other words, the depth DP3 indicates a length of the seeding hole parts 3 in the predetermined direction D31. The depth DP3 of the seeding hole parts 3 is smaller than a thickness t of the seedbed part 1. Therefore, the seeding hole parts 3 do not penetrate the seedbed part 1.

### Second Embodiment

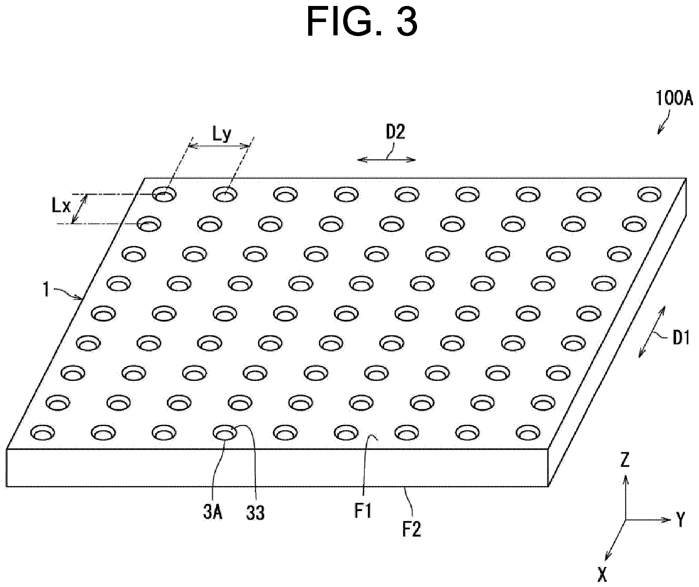

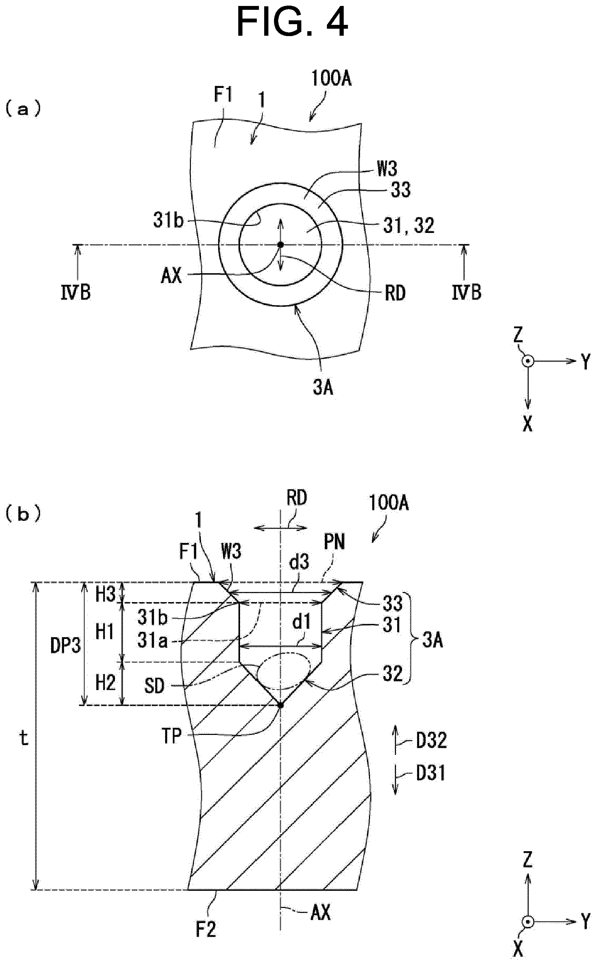

Referring to FIGS. 3 to 4(b), a seedling mat 100A according to a second embodiment of the present invention will be described. The second embodiment is different from the first embodiment mainly in that seeding hole parts 3A of the seedling mat 100A of the second embodiment has an extended section 33 that facilitates sowing. The following is a description of the main differences of the second embodiment from the first embodiment.

First, the seedling mat 100A will be described with reference to FIG. 3. FIG. 3 is a perspective view of the seedling mat 100A according to the second embodiment. As shown in FIG. 3, the seedling mat 100A includes a seedbed part 1 and a plurality of seeding hole parts 3A. Arrangement of the plurality of seeding hole parts 3A is similar to arrangement of the plurality of seeding hole parts 3 described with reference to FIG. 1.

Next, the seeding hole parts 3A will be described with reference to FIG. 4(a) and FIG. 4(b). FIG. 4(a) is a plan view of one of the seeding hole parts 3Athat is enlarged. FIG. 4(b) is a cross-sectional view along a IVB-IVB line of FIG. 4(a).

As shown in FIGS. 4(a) and 4(b), each of the plurality of seeding hole parts 3A extends from a first principal surface F1 of the seedbed part 1 toward a second principal surface F2. Specifically, each of the plurality of seeding hole parts 3A extends from the first principal surface F1 of the seedbed part 1 in a predetermined direction D31. Each of the plurality of seeding hole parts 3A further has an extended section 33 in addition to the first hole section 31 and the second hole section 32. The extended section 33 is located closer to the first principal surface F1 of the seedbed part 1 than the first hole section 31. The extended section 33 extends from an opening edge 31b of the first hole section 31 on the first principal surface F1 side in a radial direction RD relative to an axis line AX of the seeding hole part 3A to the first principal surface F1. Therefore, according to the second embodiment, seeds SD can be easily placed in the seeding hole parts 3A. That is, it is easy to sow the seeds SD into the seeding hole parts 3A. The seedling mat 100A according to the second embodiment has the same effects as the seedling mat 100 according to the first embodiment.

Furthermore, in the second embodiment, even though each of the seeding hole parts 3A has an extended section 33, an opening PN of the seeding hole part 3A is prevented from becoming excessively large. This is because the hole width d1 of the first hole sections 31 that are connected to the extended section 33 is constant. In the second embodiment, the openings PN of the seeding hole parts 3A can be prevented from becoming excessively large, and therefore, the openings PN of the seeding hole parts 3A adjacent to each other can be prevented from coming into contact to each other. As a result, strength of the seedling mat 100A can be prevented from being reduced. Note that the openings PN of the seeding hole parts 3A are openings 31a of the extended sections 33 on the first principal surface F1 side.

In particular, in the second embodiment, each of the extended sections 33 preferably has an inclined surface W3. The inclined surface W3 inclines from the first principal surface F1 of the seedbed part 1 toward the opening edge 31b of the first hole section 31. Therefore, according to this preferred example, it is even easier to sow seeds SD into the seeding hole parts 3A. For example, the extended sections 33 guide the seeds SD into the first hole sections 31 and the second hole sections 32. The inclined surface W3 may be curved. Note that the extended sections 33 may have a flat surface that is substantially parallel to the first principal surface F1. Each of the extended sections 33 further has a space SP3 surrounded by the inclined surface W3.

It is further preferred that each of the extended sections 33 is provided all around the opening edge 31b along the opening edge 31b of the first hole section 31. Specifically, it is further preferred that each of the extended sections 33 surrounds the opening edge 31b of the first hole section 31 along the opening edge 31b. In this case, the extended section 33 is widened from the opening edge 31b in a direction D32 opposite to the predetermined direction D31. Specifically, the extended section 33 extends so as to become wider from the opening edge 31b in the direction D32 opposite to the predetermined direction D31. Accordingly, it is further easy to sow the seeds SD into the seeding hole parts 3A. The extended section 33 may be partially provided corresponding to a portion of the opening edge 31b of the first hole section 31.

More specifically, the width d3 of the extended section 33 widens toward the direction D32 opposite to the predetermined direction D31. The width d3 indicates a distance between two points on the extended section 33 that are opposite to each other in the radial direction RD through the axis line AX. The inclined surface W3 of the extended section 33 is a substantially frustum surface (e.g., a substantially truncated conic surface or a substantially truncated polygonal pyramidal surface). The space SP3 of the extended section 33 has a substantially truncated frustum shape (including a substantially truncated conic shape and a substantially truncated polygonal pyramidal shape). Furthermore, the extended section 33 is linearly symmetrical with respect to the axis line AX. The extended section 33 may be asymmetrical with respect to the axis line AX as long as the extended section 33 extends from the opening edge 31b to the first principal surface F1 in the radial direction RD outward, and a shape of the extended section 33 is not particularly limited. For example, a shape of the extended section 33 in a plan view may be symmetrical or asymmetrical. Examples of the symmetrical shape include a substantially circular shape and a substantially square ring shape.

Note that, in the example of FIG. 4(b), a length H3 of the extended section 33 in the predetermined direction D31 is shorter than the length H1 of the first hole section 31 and shorter than the length H2 of the second hole section 32. However, the relationship between the length H1, the length H2, and the length H3 is not particularly limited. For example, the length H3 may be equal to or larger than the length H1, or the length H3 may be equal to or larger than the length H2. Furthermore, the seeding hole part 3A has a depth DP3 from the first principal surface F1. The depth DP3 is a sum of the lengths H3, H1, and H2. In other words, the depth DP3 indicates a length of the seeding hole part 3A in the predetermined direction D31. The depth DP3 of the seeding hole part 3A is smaller than a thickness t of the seedbed part 1. Therefore, the seeding hole part 3A does not penetrate the seedbed part 1.

### Third Embodiment

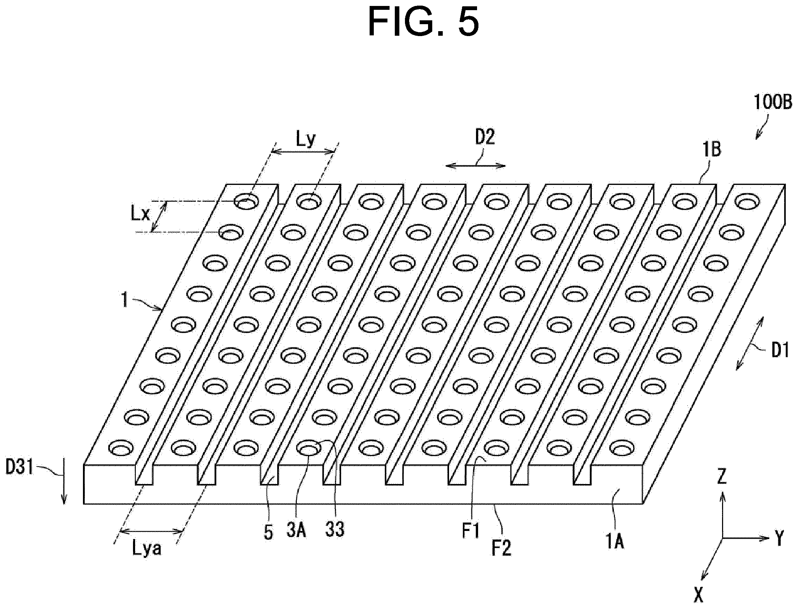

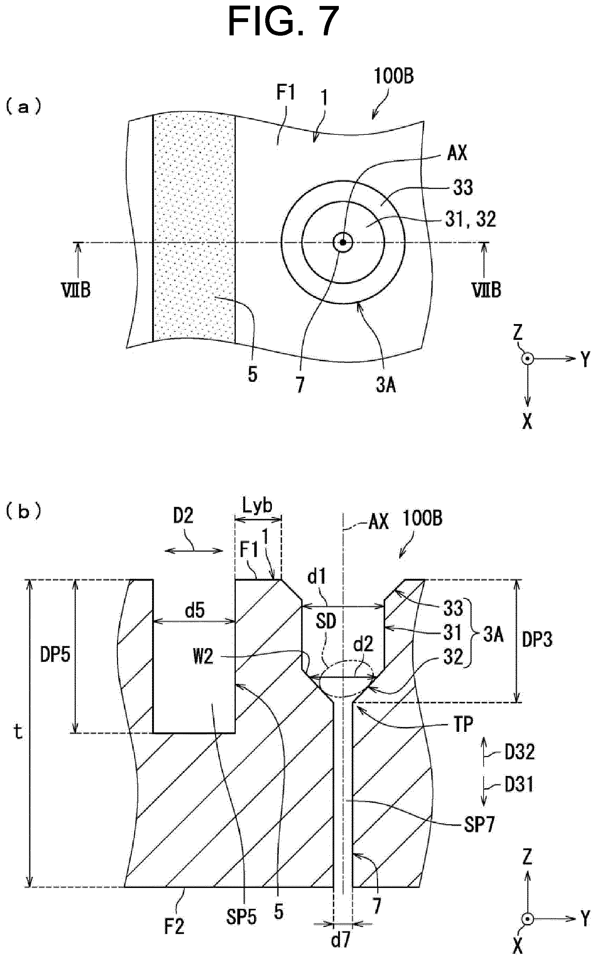

Referring to FIGS. 5 to 7(b), a seedling mat 100B according to a third embodiment of the present invention will be described. The third embodiment is different from the second embodiment mainly in that the seedling mat 100B of the third embodiment includes depression sections 5 and first through-hole sections 7 for seeding hole parts 3A. The following is a description of the main differences of the third embodiment from the second embodiment.

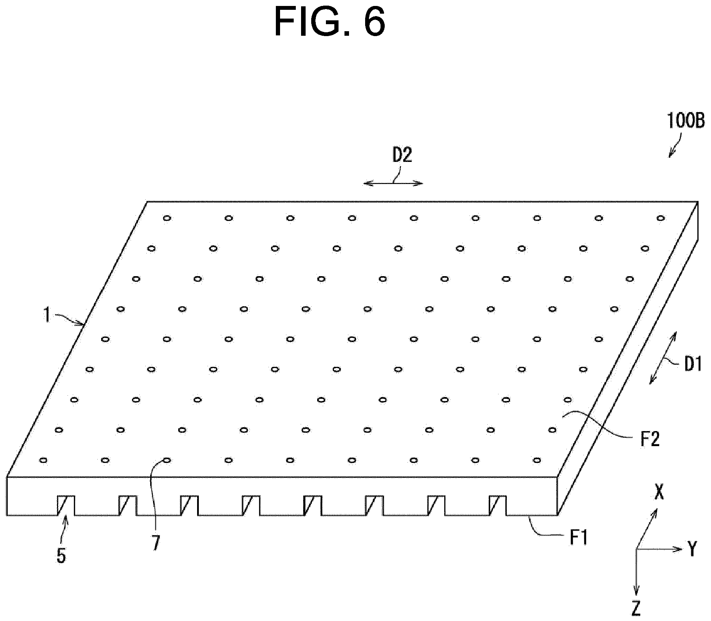

First, the seedling mat 100B will be described with reference to FIGS. 5 and 6. FIG. 5 is a perspective view of the seedling mat 100B according to the third embodiment. As illustrated in FIG. 5, the seedling mat 100B includes a seedbed part 1, a plurality of seeding hole parts 3A, and at least one depression section 5. In the example in FIG. 5, the seedling mat 100B has a plurality of depression sections 5. The individual depression sections 5 are provided at different locations in a seedbed part 1 from the plurality of seeding hole parts 3A. In other words, the depression sections 5 are separated from the seeding hole parts 3A.

Each of the plurality of depression sections 5 is recessed from the first principal surface F1 of the seedbed part 1 in a predetermined direction D31. Specifically, the individual depression sections 5 are recessed relative to the first principal surface F1 of the seedbed part 1. Accordingly, in the third embodiment, air permeability of the seedbed part 1 is improved through the depression sections 5. For example, even when there is excess moisture in the vicinity of seeds SD placed in the seeding hole parts 3A and inside the seedbed part 1, evaporation of the excess moisture can be accelerated by improving the air permeability of the seedbed part 1. As a result, reduction in a germination rate of the seeds SD caused by the excess moisture can be suppressed. Furthermore, spindly growth of seedlings germinated from the seed SDs caused by excessive moisture can be suppressed. In addition, the seedling mat 100B according to the third embodiment has the same effects as the seedling mat 100A according to the second embodiment.

In particular, in the third embodiment, each of the plurality of depression sections 5 preferably extends from one edge 1A to the other edge 1B of the seedbed part 1 along the first principal surface F1 of the seedbed part 1. According to this preferred example, the air permeability of the seedbed part 1 is further improved through the depression sections 5. As a result, for example, the reduction in the germination rate of the seeds SD can be further suppressed, and the spindly growth of seedlings germinated from the seeds SD can be further suppressed. The depression sections 5 can also improve drainage of the seedbed part 1.

In the example of FIG. 5, each of the plurality of depression sections 5 has a substantially groove shape and extends in a substantially straight line in a first direction D1. The plurality of depression sections 5 are aligned in a second direction D2 at intervals Lya. The plurality of depression sections 5 are substantially parallel to each other. The plurality of seeding hole parts 3A are aligned in a straight line in the first direction D1 between the depression sections 5 adjacent to each other.

The shape of the depression sections 5 is not limited as long as the depression sections 5 are recessed with respect to the first principal surface F1. For example, each of the depression sections 5 may not extend from the one edge 1A to the other edge 1B in the seedbed part 1. For example, the depression sections 5 may have a segmental shape. In this case, the seedling mat 100B may have a plurality of segmental depression sections 5. For example, the depression sections 5 may have a substantially grid shape. For example, the depression sections 5 may be recessed hole sections having a substantially hemispherical shape, recessed hole sections having a substantially semi-elliptical shape, recessed hole sections having a substantially pyramidal shape, or recessed hole sections having a substantially truncated pyramidal shape. In this case, the seedling mat 100B may have a plurality of depression sections 5 that are hole sections.

FIG. 6 is a perspective view of a back surface of the seedling mat 100B according to the third embodiment. As shown in FIG. 6, the seedling mat 100B further includes the plurality of first through-hole sections 7. The plurality of first through-hole sections 7 are arranged so as to correspond to the plurality of seeding hole parts 3A shown in FIG. 5.

Next, the first through-hole sections 7 will be described with reference to FIGS. 7(a) and 7(b). FIG. 7(a) is an enlarged plan view of one of the depression sections 5, one of the seeding hole parts 3A, and one of the first through-hole sections 7. In FIG. 7(a), the depression section 5 is dotted hatched to clarify the drawing. FIG. 7(b) is a cross-sectional view taken along a line VIIB to VIIB of FIG. 7(a).

As shown in FIG. 7(b), the first through-hole sections 7 are arranged so as to correspond to the plurality of seeding hole parts 3A. The first through-hole sections 7 are connected to the seeding hole part 3A. The first through-hole sections 7 have respective through-spaces SP7.

Specifically, the first through-hole sections 7 are positioned farther from the first principal surface F1 of the seedbed part 1 relative to a second hole section 32. The first through-hole sections 7 are connected to the respective second hole sections 32. Each of the first through-hole sections 7 extends from the second hole section 32 to a second principal surface F2 of the seedbed part 1. Therefore, according to the third embodiment, water permeability of the seedling mat 100B can be improved through the first through-hole sections 7. For example, when the seeding hole parts 3A are irrigated, excess water can be discharged outside the seedling mat 100B from the seeding hole parts 3A through the first through-hole sections 7. Therefore, seeds SD can be prevented from getting flooded in the seeding hole parts 3A. As a result, a germination rate of the seeds SD can be improved. The first through-hole sections 7 can further improve the air permeability of the seedling mat 100B.

The first through-hole sections 7 are connected to the respective second hole sections 32 at tip end portions TP of the second hole sections 32 in the predetermined direction D31. The first through-hole sections 7 extend from the tip end portions TP of the second hole sections 32 to the second principal surface F2 of the seedbed part 1. In this preferred example, the water permeability of the seedling mat 100B can be further improved through the first through-hole sections 7. This is because the second hole sections 32 facilitate collection of moisture toward the tip end portions TP. For example, when the seeding hole parts 3A are irrigated, excess water can be effectively discharged outside the seedling mat 100B from the seeding hole parts 3A through the first through-hole sections 7. Note that connection points between the first through-hole sections 7 and the second hole sections 32 are not particularly limited as long as the first through-hole sections 7 extend from the second hole sections 32 to the second principal surface F2. For example, Each of the first through-hole sections 7 may extend from a wall surface W2 of the second hole section 32 to the second principal surface F2.

Furthermore, in the example in FIG. 7(b), a hole width d7 of the first through-hole section 7 is equal to or smaller than a smallest value of a hole width d2 of the second hole sections 32. Specifically, the hole width d7 of the first through-hole section 7 is smaller than a smallest diameter of a seed SD. Therefore, the seed SD is prevented from entering the through-space SP7 of the first through-hole section 7. The hole width d7 of the first through-hole section 7 is preferably equal to or smaller than 1/2 of the smallest diameter of the seed SD. According to this preferred example, the seeds SD are more effectively prevented from entering the through-spaces SP7 of the first through-hole sections 7. Note that the hole width d7 indicates a length of the first through-hole section 7 in a direction perpendicular to the predetermined direction D31.

Furthermore, the first through-hole sections 7 extend in a substantially straight line in the predetermined direction D31. Note that a shape of the first through-hole sections 7 is not particularly limited as long as the first through-hole sections 7 extend from the second hole sections 32 to the second principal surface F2. For example, a shape of the first through-hole sections 7 in a plan view may be symmetrical or asymmetrical. The symmetrical shape is, for example, a substantially circle shape, a substantially polygon shape, or a substantially oval shape.

Next, the depression sections 5 will be described in detail with reference to FIG. 7(b). Each of the depression sections 5 has a depression space SP5. Each of the depression sections 5 is separated from a corresponding one of the seeding hole parts 3A (specifically, the extended sections 33) at intervals Lyb in the second direction D2. A depth DP5 of the depression sections 5 with respect to the first principal surface F1 of the seedbed part 1 is preferably deeper than the depth DP3 of the seeding hole parts 3A with respect to the first principal surface F1 of the seedbed part 1. According to this preferred example, when there is excess moisture in the seeding hole parts 3A, the moisture in the seeding hole parts 3A easily moves toward the depression sections 5 due to gravity. In other words, excess water in the seeding hole parts 3Acan be effectively discharged. As a result, for example, the reduction in the germination rate of the seeds SD can be further suppressed, and the spindly growth of seedlings germinated from the seeds SD can be further suppressed. The moisture that has moved from the seeding hole parts 3A to the depression sections 5 is discharged outside the seedling mat 100B through the depression sections 5. Specifically, the moisture that has moved from the seeding hole parts 3A to the depression sections 5 is discharged outside the seedling mat 100B through the depression spaces SP5 of the depression sections 5.

In the example of FIG. 7(b), the depression sections 5 have a substantially U-shape (e.g., an angular substantially U-shape) in a cross-sectional view. In this specification, the cross-sectional view indicates viewing an object by cutting the object by a virtual plane perpendicular to the first principal surface F1. Note that the shape of the depression sections 5 is not limited as long as the depression sections 5 are recessed with respect to the first principal surface F1. For example, the depression sections 5 may have a substantially V-shape in a cross-sectional view.

In the example in FIG. 7(b), the width d5 of the depression sections 5 is substantially the same as the hole width d1 of the first hole sections 31. However, as long as the depression sections 5 are separated from the seeding hole parts 3A, the width d5 of the depression sections 5 may be larger or smaller than the hole width d1 of the first hole sections 31. The width d5 indicates a length of the depression sections 5 in a direction perpendicular to the predetermined direction D31. Furthermore, the depth DP5 of the depression sections 5 may be substantially the same as the depth DP3 of the seeding hole parts 3A, or the depth DP5 of the depression sections 5 may be shallower than the depth DP3 of the seeding hole parts 3A. The depth DP5 indicates a length of the depression sections 5 in the predetermined direction D31. The depth DP5 of the depression sections 5 is smaller than a thickness t of the seedbed part 1. Therefore, the depression sections 5 do not penetrate the seedbed part 1.

Furthermore, in the third embodiment, the seedling mat 100B may not include one of or both the extended sections 33 and the first through-hole sections 7. Alternatively, the seedling mat 100B may not include one of or both the extended sections 33 and the depression sections 5.

### Fourth Embodiment

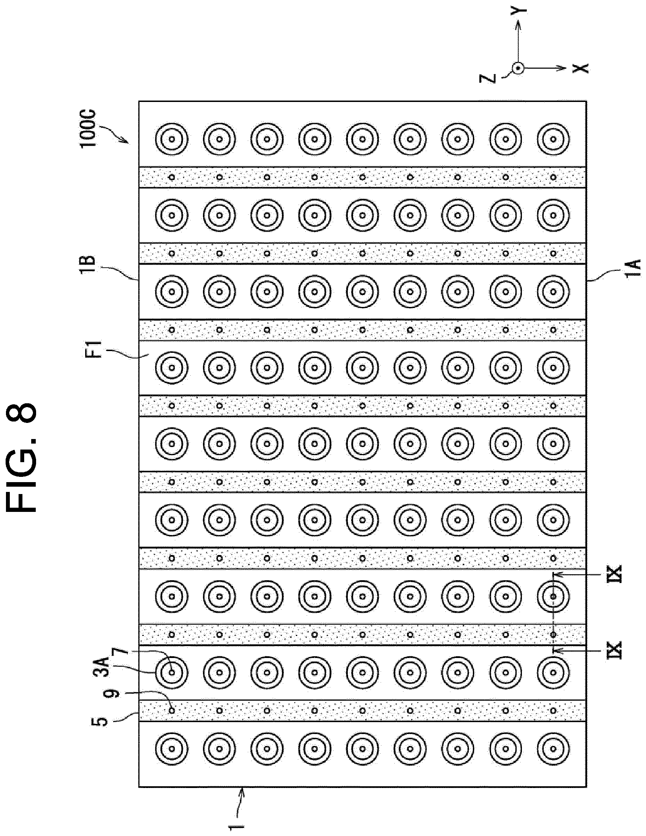

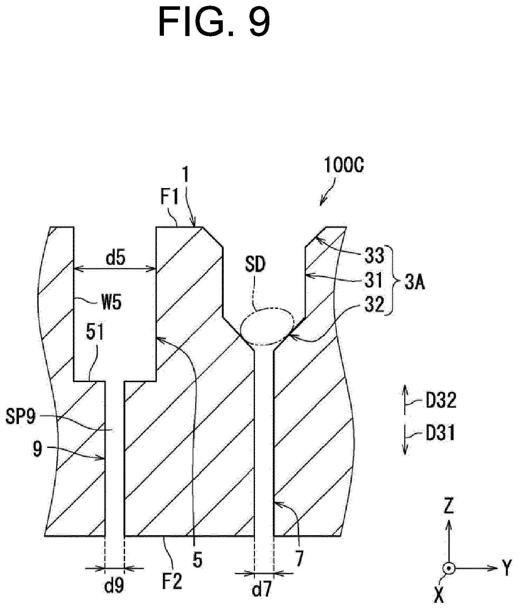

Referring to FIGS. 8 and 9, a seedling mat 100C according to a fourth embodiment of the present invention will be described. The fourth embodiment is different from the third embodiment mainly in that the seedling mat 100C of the fourth embodiment includes second through-hole sections 9 for depression sections 5. The following is a description of the main differences of the fourth embodiment from the third embodiment.

First, the seedling mat 100C will be described with reference to FIG. 8. FIG. 8 is a plan view of the seedling mat 100C according to the fourth embodiment. In FIG. 8, the depression sections 5 are dotted hatched to clarify the drawing. As shown in FIG. 8, the seedling mat 100C further includes at least one second through-hole section 9. In the example in FIG. 8, the seedling mat 100C has a plurality of second through-hole sections 9. Two or more second through-hole sections 9 are arranged for each of the plurality of depression sections 5. The two or more second through-hole sections 9 are arranged along each of the plurality of depression sections 5. Note that one second through-hole section 9 may be located in one depression section 5.

Next, the second through-hole sections 9 will be described in detail with reference to FIG. 9. FIG. 9 is a cross-sectional view taken along a line IX-IX of FIG. 8. Each of the second through-hole sections 9 has a through-space SP9 as illustrated in FIG. 9. The second through-hole sections 9 are positioned separately from a first principal surface F1 of a seedbed part 1 relative to the depression section 5. The second through-hole sections 9 are connected to the depression sections 5. The second through-hole sections 9 extend from the depression sections 5 to a second principal surface F2 of the seedbed part 1. Therefore, according to the fourth embodiment, the water accumulated in the depression sections 5 can be efficiently discharged outside the seedling mat 100C through the second through-hole sections 9. For example, when the seedling mat 100C is irrigated, water accumulated in the depression sections 5 can be effectively discharged outside the seedling mat 100C through the second through-hole sections 9. Furthermore, the second through-hole sections 9 can improve air permeability of the seedling mat 100C. In addition, the seedling mat 100C according to the fourth embodiment has the same effects as the seedling mat 100B according to the third embodiment.

Preferably, the second through-hole sections 9 are connected to the depression sections 5 at bottoms 51 of the depression sections 5. The second through-hole sections 9 extend from the bottoms 51 of the depression sections 5 to the second principal surface F2 of the seedbed part 1. In this preferred example, the water accumulated in the depression sections 5 can be more efficiently discharged outside the seedling mat 100C through the second through-hole sections 9. This is because water accumulated in the depression sections 5 is collected at the bottoms 51. Note that connection points between the second through-hole sections 9 and the depression sections 5 are not particularly limited as long as the second through-hole sections 9 extend from the depression sections 5 to the second principal surface F2. For example, each of the second through-hole sections 9 may extend from a wall surface W5 of the depression section 5 to the second principal surface F2.

In the example of FIG. 9, a hole width d9 of the second through-hole sections 9 is smaller than a width d5 of the depression sections 5. However, the hole width d9 of the second through-hole sections 9 may be substantially the same as the width d5 of the depression sections 5 or larger than the width d5 of the depression sections 5. Note that the hole width d9 indicates a length of the second through-hole sections 9 in a direction perpendicular to a predetermined direction D31. Furthermore, the second through-hole sections 9 extend in a substantially straight line in the predetermined direction D31. Note that a shape of the second through-hole sections 9 is not particularly limited as long as the second through-hole sections 9 extend from the depression sections 5 to the second principal surface F2. For example, a shape of the second through-hole sections 9 in a plan view may be symmetrical or asymmetrical. The symmetrical shape is, for example, a substantially circle shape, a substantially polygon shape, or a substantially oval shape.

Furthermore, in the fourth embodiment, the seedling mat 100C may not include one of or both extended sections 33 and first through-hole sections 7.

### Fifth Embodiment

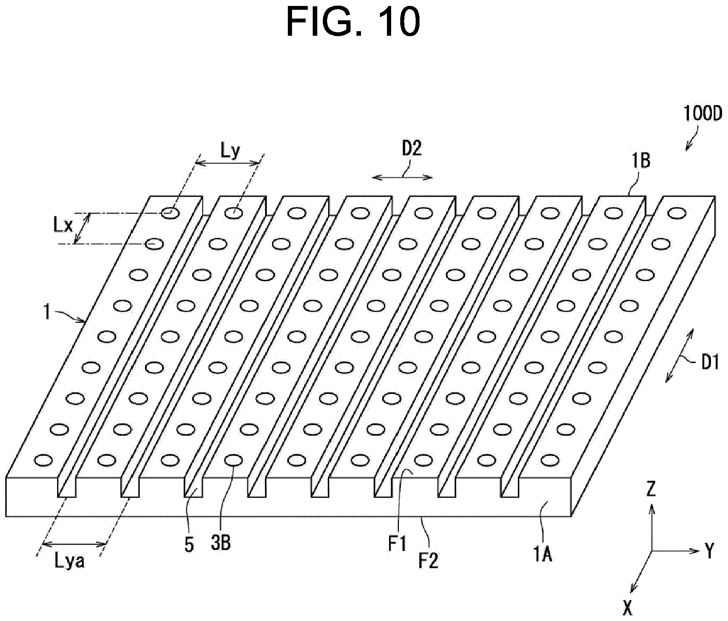

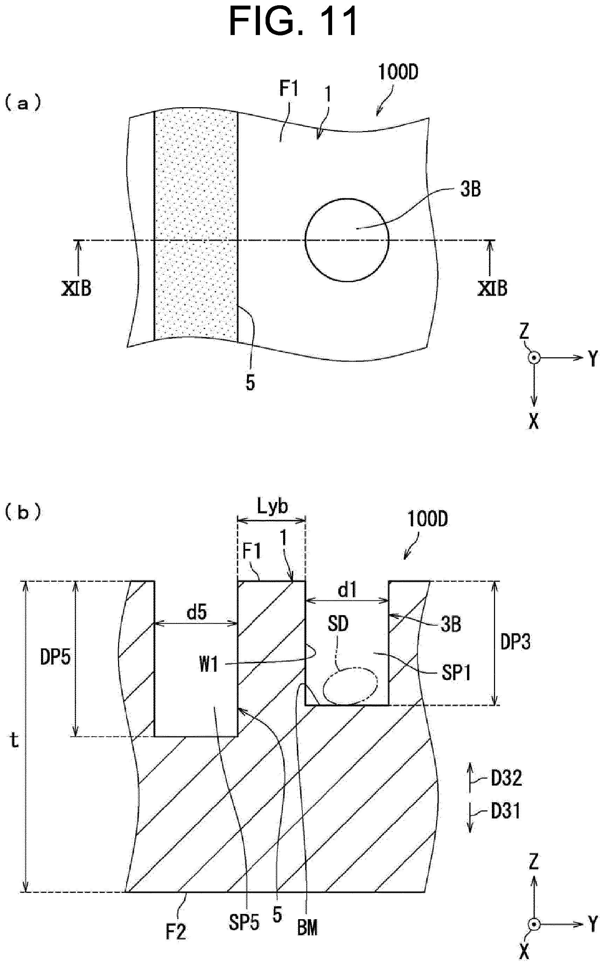

Referring to FIGS. 10 to 11(b), a seedling mat 100D according to a fifth embodiment of the present invention will be described. The fifth embodiment is mainly different from the first embodiment described with reference to FIGS. 1 to 2(b) in that the seedling mat 100D according to the fifth embodiment includes depression sections 5 similarly to FIG. 5. The following is a description of the main differences of the fifth embodiment from the first embodiment.

First, the seedling mat 100D will be described with reference to FIG. 10. FIG. 10 is a perspective view of the seedling mat 100D according to the fifth embodiment. As illustrated in FIG. 10, the seedling mat 100D includes a seedbed part 1, a plurality of seeding hole parts 3B, and at least one depression section 5. In the example in FIG. 10, the seedling mat 100D has a plurality of depression sections 5. The individual depression sections 5 are provided at different locations in the seedbed part 1 from the plurality of seeding hole parts 3B. The other configurations and arrangements of the depression sections 5 according to the fifth embodiment are the same as those of the depression sections 5 according to the third embodiment described with reference to FIGS. 5 and 7(b).

The plurality of seeding hole parts 3B are provided in the seedbed part 1. Each of the plurality of seeding hole parts 3B is a hole for placing a seed SD. Arrangement of the plurality of seeding hole parts 3B is similar to the arrangement of the plurality of seeding hole parts 3 described with reference to FIG. 1 and the arrangement of the plurality of seeding hole parts 3A described with reference to FIG. 3.

Next, the seeding hole parts 3B and the depression sections 5 will be described with reference to FIGS. 11(a) and 11(b). FIG. 11(a) is an enlarged plan view of one of the seeding hole parts 3B and one of the depression sections 5. In FIG. 11(a), the depression section 5 is dotted hatched to clarify the drawing. FIG. 11(b) is a cross-sectional view along a XIB-XIB line of FIG. 11(a).

As shown in FIG. 11(b), each of the plurality of seeding hole parts 3B extends from a first principal surface F1 of the seedbed part 1 toward a second principal surface F2. Specifically, each of the plurality of seeding hole parts 3B extends from the first principal surface F1 of the seedbed part 1 in a predetermined direction D31. The other configuration of the seeding hole parts 3B is the same as that of the first hole sections 31 described with reference to FIG. 2(b). A hole width d1 of the seeding hole part 3B is preferably larger than a smallest diameter of a seed SD. Note that, for example, the hole width d1 of the seeding hole part 3B may be larger than a maximum diameter of the seed SD. However, in the fifth embodiment, each of the seeding hole parts 3B has a bottom BM in addition to a wall surface W1. The seed SD is placed on the bottom BM. Furthermore, in the fifth embodiment, as long as the seedling mat 100D includes the depression sections 5, a configuration of the seeding hole parts 3B is not limited to the configuration of the first hole sections 31 described with reference to FIG. 2(b), and an arbitrary configuration may be employed. For example, the seeding hole parts 3B have a substantially columnar shape (e.g., a substantially cylindrical shape or a substantially prism shape), a substantially pyramidal shape (e.g., a substantially conic shape or a substantially polygonal pyramidal shape), or a substantially truncated pyramidal shape (e.g., a substantially truncated conic shape or a substantially truncated polygonal pyramidal shape).

Each of the depression sections 5 are recessed relative to the first principal surface F1 of the seedbed part 1. Accordingly, as with the third embodiment, the air permeability of the seedbed part 1 is improved through the depression sections 5 according to the fifth embodiment. Effects of improved air permeability of the seedbed part 1 are similar to the effects of the depression sections 5 in the third embodiment. Furthermore, as with the third embodiment, each of the plurality of depression sections 5 preferably extends from one edge 1A to the other edge 1B of the seedbed part 1 along the first principal surface F1 of the seedbed part 1 also in the fifth embodiment. In this case, effects similar to the effects of the depression sections 5 in the third embodiment are attained. As with the third embodiment, a depth DP5 of the depression sections 5 with respect to the first principal surface F1 of the seedbed part 1 is preferably deeper than a depth DP3 of the seeding hole parts 3B with respect to the first principal surface F1 of the seedbed part 1 also in the fifth embodiment. In this case, effects similar to the effects of the depression sections 5 in the third embodiment are attained. The depression sections 5 are separated from the seeding hole parts 3B at intervals Lyb in a second direction D2.

Note that the depth DP5 of the depression sections 5 may be substantially the same as the depth DP3 of the seeding hole parts 3B, or the depth DP5 of the depression sections 5 may be shallower than the depth DP3 of the seeding hole parts 3B.

Furthermore, in the fifth embodiment, the seedling mat 100D may not include one of or both the first through-hole sections 7 and the second through-hole sections 9 described with reference to FIG. 9. When the seedling mat 100D includes the first through-hole sections 7 described with reference to FIG. 9, the first through-hole sections 7 are connected to the seeding hole parts 3B (specifically, bottoms BM) illustrated in FIG. 11(b). This is the same as a sixth embodiment described below. Furthermore, in terms of the fifth embodiment, in the third and fourth embodiments described with reference to FIGS. 7(b) and 9, the seeding hole parts 3Amay not include the second hole sections 32 and the extended sections 33. In other words, in the third and fourth embodiments described with reference to FIG. 7(b) and 9, the seedling mats 100B and 100C may include, instead of the seeding hole parts 3A, the seeding hole parts 3B illustrated in FIG. 11(b).

### Sixth Embodiment

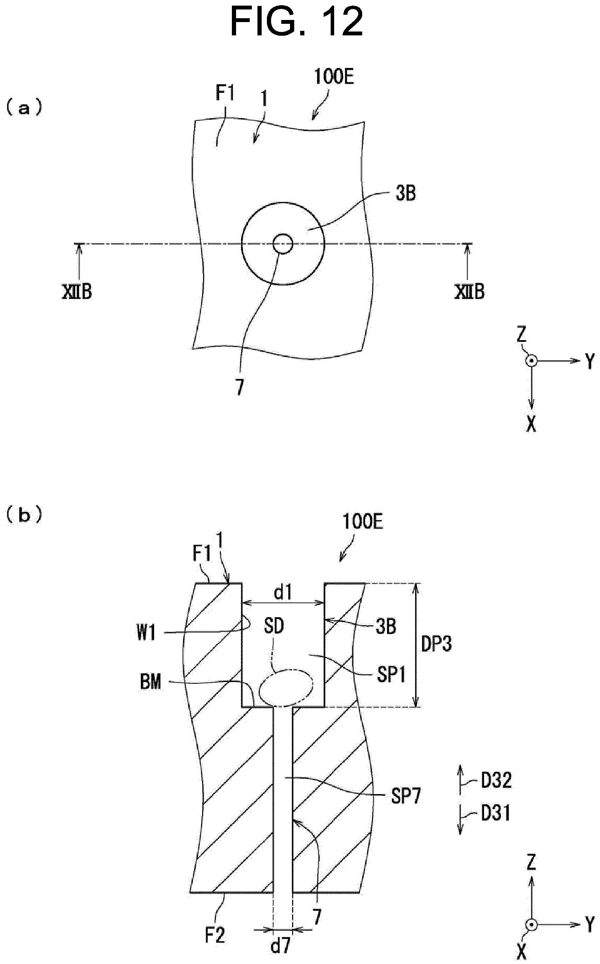

Referring to FIGS. 12(a) and 12(b), a seedling mat 100E according to a sixth embodiment of the present invention will be described. The sixth embodiment is mainly different from the first embodiment described with reference to FIGS. 1 to 2(b) in that the seedling mat 100E according to the sixth embodiment includes first through-hole sections 7 similarly to FIG. 7(b). The following is a description of the main differences of the sixth embodiment from the first embodiment. Furthermore, the sixth embodiment will be described appropriately with reference to FIGS. 1 to 6.

FIG. 12(a) is an enlarged plan view of the seedling mat 100E with a seeding hole part 3B and a first through-hole section 7 according to the sixth embodiment. As illustrated in FIG. 12(a), the seedling mat 100E includes a seedbed part 1. Furthermore, the seedling mat 100E includes a plurality of seeding hole parts 3B illustrated in FIG. 12(a) instead of the plurality of seeding hole parts 3 of the seedling mat 100 illustrated in FIG. 1. The seedling mat 100E further includes the plurality of first through-hole sections 7 illustrated in FIG. 6. The plurality of first through-hole sections 7 are arranged so as to correspond to the plurality of seeding hole parts 3B.

FIG. 12(b) is a cross-sectional view taken along a line XIIB to XIIB of FIG. 12(a). As illustrated in FIG. 12(b), a configuration of the seeding hole parts 3B according to the sixth embodiment is similar to the configuration of the seeding hole parts 3B illustrated in FIG. 11(b). The configuration of the first through-hole sections 7 according to the sixth embodiment is the same as that of the first through-hole sections 7 shown in FIG. 7(b).

Specifically, the first through-hole sections 7 are positioned separately from the first principal surface F1 of the seedbed part 1 relative to the seeding hole parts 3B. The first through-hole sections 7 are connected to the seeding hole parts 3B. The first through-hole sections 7 extend to a second principal surface F2 of the seedbed part 1. Therefore, according to the sixth embodiment, water permeability of the seedling mat 100E can be improved through the first through-hole sections 7. Effects of improved water permeability of the seedling mat 100E are similar to the effects of the first through-hole sections 7 in the third embodiment. Furthermore, the first through-hole sections 7 can improve air permeability of the seedling mat 100E.

Preferably, the first through-hole sections 7 are connected to the seeding hole parts 3B at bottoms BM of the seeding hole parts 3B. The first through-hole sections 7 extend from the bottom BM of the seeding hole parts 3B to a second principal surface F2 of the seedbed part 1. In this case, effects similar to the effects of the first through-hole sections 7 in the third embodiment are attained. Note that connection points between the first through-hole sections 7 and the seeding hole parts 3B are not particularly limited as long as the first through-hole sections 7 extend from the seeding hole parts 3B to the second principal surface F2. For example, each of the first through-hole sections 7 may extend from a wall surface W1 of the seeding hole part 3B to the second principal surface F2.

In the example in FIG. 12(b), a hole width d7 of the first through-hole sections 7 is smaller than a size of bottoms BM of the seeding hole parts 3B. In other words, the hole width d7 of the first through-hole sections 7 is smaller than the hole width d1 of the seeding hole parts 3B. Specifically, the hole width d7 of the first through-hole section 7 is smaller than a smallest diameter of a seed SD. Therefore, the seed SD is prevented from entering the through-space SP7 of the first through-hole section 7. The hole width d7 of the first through-hole section 7 is preferably equal to or smaller than 1/2 of the smallest diameter of the seed SD. According to this preferred example, the seeds SD are more effectively prevented from entering the through-spaces SP7 of the first through-hole sections 7. Note that, in the example of FIG. 12(b), the bottoms BM are a substantially flat surface.

Note that, in the sixth embodiment, the seedling mat 100E may include the depression sections 5 described with reference to FIGS. 7(b) and 11(b). In this case, the depression sections 5 may have the respective second through-hole sections 9 described with reference to FIG. 9.

### Seventh Embodiment

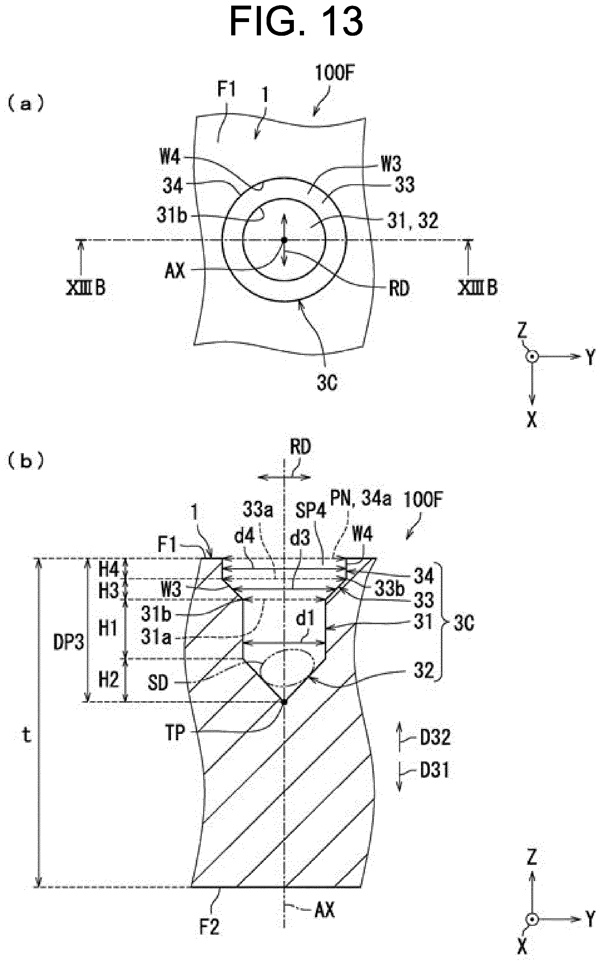

Referring to FIGS. 13(a) and 13(b), a seedling mat 100F according to a seventh embodiment of the present invention will be described. The seventh embodiment is mainly different from the second embodiment described with reference to FIGS. 3 to 4 in that seeding hole parts 3C of the seedling mat 100F according to the seventh embodiment include respective third hole sections 34. Therefore, an entire configuration of the seedling mat 100F according to the seventh embodiment is the same as that of the seedling mat 100A described with reference to FIG. 3. Furthermore, the seventh embodiment will be described appropriately with reference to FIG. 3. The following is a description of the main differences of the seventh embodiment from the second embodiment.

FIG. 13(a) is an enlarged plan view of the seedling mat 100F with one of the seeding hole parts 3C according to the seventh embodiment. As illustrated in FIG. 13(a), the seedling mat 100F includes a seedbed part 1. Furthermore, the seedling mat 100F includes a plurality of seeding hole parts 3C illustrated in FIG. 13(a) instead of the plurality of seeding hole parts 3A of the seedling mat 100A illustrated in FIG. 3.

FIG. 13(b) is a cross-sectional view taken along a line XIIIB to XIIIB of FIG. 13(a). As shown in FIG. 13(b), each of the seeding hole parts 3C includes a first hole section 31, a second hole section 32, an extended section 33, and a third hole section 34.

The third hole section 34 is located closer to a first principal surface F1 of the seedbed part 1 than the extended section 33. The third hole section 34 extends from the first principal surface F1 in a predetermined direction D31. In the example in FIG. 13(b), the third hole section 34 extends in a vertical direction. The third hole section 34 is connected to the extended section 33 at an end of the extended section 33 on a first principal surface F1 side. In other words, the third hole section 34 is connected to an opening edge 33b of the extended section 33 on the first principal surface F1 side. In other words, an opening 33a and the opening edge 33b are located on a side closer to a second principal surface F2 than to the first principal surface F1 in the extended section 33.

In other words, a hole width d4 of the third hole section 34 is constant in the predetermined direction D31. Accordingly, leaves that have grown from a seed SD grow along the third hole section 34, and therefore, the leaves are prevented from spreading excessively in a horizontal direction. As a result, for example, planting tines of a transplanting machine can be prevented from contacting the leaves, and seedlings can be scraped smoothly from the seedling mat 100F by the planting tines. In addition, since the third hole sections 34 with the constant hole width d4 are placed at an uppermost position, the growth of the leaves from the seeds may be further promoted when compared with a case where the extended sections 33 having inclined surfaces W3 are positioned at the uppermost position.

In this specification, a concept of having the constant hole width d4 of the third hole section 34 includes having a substantially constant hole width d4. Note that the hole width d4 indicates a length of the third hole section 34 in a direction perpendicular to the predetermined direction D31. Furthermore, openings PN of the seeding hole parts 3C are openings 34a of the third hole sections 34 on the first principal surface F1 side.

Next, the seeding hole parts 3C will be described with reference to FIG. 13(a) and FIG. 13(b). The hole width d4 of the third hole sections 34 is larger than the hole width d1 of the first hole sections 31.

Furthermore, the third hole sections 34 of the seeding hole parts 3C have a substantially columnar shape. Specifically, each of the third hole sections 34 has a wall surface W4 and a space SP4 surrounded by the wall surface W4. The wall surface W4 is a substantially cylindrical surface. Therefore, the space SP4 has a substantially columnar shape. The third hole section 34 is linearly symmetrical with respect to an axis line AX of the seeding hole part 3C.

In the examples of FIGS. 13(a) and 13(b), the third hole section 34 has a substantially cylindrical shape. Therefore, the wall surface W4 is a substantially cylindrical surface. Furthermore, the space SP4 has a substantially cylindrical shape. Note that the shape of the third hole section 34 is not limited as long as the hole width d4 of the third hole section 34 is constant in the predetermined direction D31. For example, the third hole section 34 may have a substantially prism shape, the wall surface W4 may be a substantially rectangular cylindrical surface, and the space SP4 may have a substantially prism shape. For example, a shape of the third hole section 34 in a plan view may be symmetrical or asymmetrical. The symmetrical shape is, for example, a substantially circle shape, a substantially polygon shape, or a substantially oval shape.

Note that, in the example of FIG. 13(b), a length H4 of the third hole section 34 in the predetermined direction D31 is shorter than a length H1 of the first hole section 31 in the predetermined direction D31. The length H4 of the third hole section 34 is substantially the same as the length H3 of the extended section 33 in the predetermined direction D31. However, the length H4 may be larger or smaller than the length H3. However, the relationship among the lengths H1 to H4 is not particularly limited. The seeding hole parts 3C have a depth DP3 from the first principal surface F1. The depth DP3 is a sum of the lengths H1 to H4. The depth DP3 of the seeding hole parts 3C is smaller than a thickness t of the seedbed part 1. Therefore, the seeding hole parts 3C does not penetrate the seedbed part 1.

The present invention will be specifically described with reference to the following examples, but the present invention is not limited to the following examples.

### Examples

Examples 1 to 4 and a comparative example of the present invention will now be described.

### Example 1: with depression, with through-hole, and (depression depth) > (seeding hole depth)

The seedling mat 100B described with reference to FIGS. 5 to 7(b) is used as a seedling mat according to a first example. Note that the seedling mat according to the first example includes the seeding hole parts 3B illustrated in FIG. 11(b) instead of the seeding hole parts 3A illustrated in FIG. 7(b). In other words, the seedling mat according to the first example is the seedling mat 100D illustrated in FIG. 11(b) with the first through-hole sections 7 illustrated in FIG. 12(b) added as a configuration.

### Example 2: with depression, without through-hole, and (depression depth) > (seeding hole depth)

The seedling mat 100D illustrated in FIG. 11(b) is used as a seedling mat according to a second example. In the second example, the depth DP5 of the depression sections 5 is deeper than that of the seeding hole parts 3B.

### Example 3: with depression, without through-hole, and (depression depth) < (seeding hole depth)

The seedling mat 100D illustrated in FIG. 11(b) is used as a seedling mat according to a third example. In the third example, the depth DP5 of the depression sections 5 is deeper than that of the seeding hole parts 3B.

### Example 4: without depression and with through-hole

The seedling mat 100E illustrated in FIG. 12(b) is used as a seedling mat according to a fourth example.

### Comparative Example: without depression and without through-hole

As a seedling mat according to a comparative example, a seedling mat obtained by omitting the first through-hole sections 7 from the seedling mat 100E illustrated in FIG. 12(b) is used.

### Other Conditions in First to Fourth Examples and Comparative Example

In the seedling mats according to the first to fourth examples and the comparative example, compositions of the seedbed parts 1 are the same.

Sizes of the seedling mats according to the first to fourth examples and the comparative example will be described with reference to FIGS. 10, 11(b), and 12(b). A thickness t of the seedbed part 1 is 30 mm. A depth DP3 of the seeding hole parts 3A is 10 mm. A hole width d1 of the seeding hole parts 3A is 6 mm. A width d5 of the depression sections 5 is 6 mm. A hole width d7 of the first through-hole sections 7 is 2 mm. A distance Lyb between the depression sections 5 and the seeding hole parts 3Ais 8.5 mm. A distance Lya between the depression sections 5 adjacent to each other is 29 mm. A depth DP5 of the depression sections 5 of the second example is 15 mm. A depth DP5 of the depression sections 5 of the third example is 15 mm.

Cabbage seeds are used as seeds SD. Then, 30 seeding hole parts 3B are provided for each of the first to fourth examples and the comparative example, and germination of the seeds SD in 25 days was observed.

### Results of First to Fourth Examples and Comparative Example

Observation results of the germination on the seedling mats in the first to fourth examples and the comparative example are shown in a table below. The number of times germination is performed in any of the first to fourth examples is larger than that of the comparative example. The largest number of times germination is performed in the first example. The second largest number of times germination is performed in the fourth example. The third largest number of times germination is performed in the second example. The fourth largest number of times germination is performed in the third example.

**[Table 1]**

| | Example 1 | Example 2 | Example 3 | Example 4 | Comparative Example |
|---|---|---|---|---|---|
| Germination count / Seeding count | 25/30 | 18/30 | 6/30 | 19/30 | 2/30 |

The embodiments and the examples of the present invention have been described hereinabove with reference to the accompanying drawings. However, the present invention is not limited to the embodiments and the examples described above, and can be performed in various aspects in a range without departing from its spirit. The plurality of components disclosed in the above embodiments may be modified where appropriate. For example, one of all the components shown in one embodiment may be added to another embodiment or some components of all the components shown in one embodiment may be removed from the embodiment.

The drawings are schematically shown with each component as a main subject in order to facilitate understanding of the present invention, and the thicknesses, the lengths, the numbers, the spacings, and so on of the illustrated components may be different from the actual ones due to the convenience of the drawings. Furthermore, the configurations of the individual components illustrated in the above embodiments are merely examples and are not particularly limited, and various modifications may be made without substantially departing from the effects of the present invention.

The application further discloses supplementary note as below. Here, the following supplementary note shall not limit the present invention.

### Appendix 1: Mainly corresponds to Fifth Embodiment

A seedling mat in which seeds are sown includes a seedbed part having first and second principal surfaces that face each other and formed of a material allowing roots to grow, a plurality of seeding hole parts that are arranged in the seedbed part and that are for placing the seeds, and a depression section located in a position different from the plurality of seeding hole parts in the seedbed part, wherein each of the plurality of seeding hole parts extends from the first principal surface to the second principal surface in the seedbed part, and the depression section is recessed with respect to the first principal surface of the seedbed part.

### Appendix 2: Mainly corresponds to Sixth Embodiment

A seedling mat in which seeds are sown includes a seedbed part having first and second principal surfaces that face each other and formed of a material allowing roots to grow, a plurality of seeding hole parts that are arranged in the seedbed part and that are for placing the seeds, and a plurality of first through-hole sections arranged so as to correspond to the plurality of seeding hole parts, wherein the first through-hole sections are connected to the seeding hole parts and extend to the second principal surface of the seedbed part.

### INDUSTRIAL APPLICABILITY

The present invention relates to a seedling mat and has industrial applicability.

### DESCRIPTION OF REFERENCE NUMERALS

1 Seedbed part
3, 3A, 3B Seeding hole part
5 Depression section
7 First through-hole section
9 Second through-hole section
31 First hole section
32 Second hole section
33 Extended section
32 Third hole section
100, 100A to 100E Seedling mat
W1, W2 Wall surface
W3 Inclined surface
SD Seed

## Claims

1. A seedling mat in which seeds are sown, comprising:
a seedbed part having first and second principal surfaces that face each other and formed of a material allowing roots to grow; and
a plurality of seeding hole parts that are arranged in the seedbed part and that are for placing the seeds, wherein
each of the plurality of seeding hole parts includes
a first hole section extending in a predetermined direction from the first principal surface of the seedbed part toward the second principal surface, and
a second hole section that is arranged in a position separated from the first principal surface of the seedbed part with respect to the first hole section and that is connected to the first hole section,
a hole width of the first hole section is constant in the predetermined direction, and
a hole width of the second hole section narrows in the predetermined direction.

2. The seedling mat according to claim 1, wherein each of the plurality of seeding hole parts further includes an extended section extending, outward in a diameter direction with respect to an axis line of the seeding hole part, from an opening edge of the first hole section closer to the first principal surface to the first principal surface.

3. The seedling mat according to claim 2, wherein the extended section includes an inclined surface that inclines from the first principal surface to the opening edge of the first hole section.

4. The seedling mat according to claim 2 or claim 3, wherein the extended section surrounds the opening edge of the first hole section along the opening edge and extends so as to become wider from the opening edge in a direction opposite the predetermined direction.

5. The seedling mat according to claim 1, wherein
each of the plurality of seeding hole parts further includes
an extended section that surrounds the opening edge of the first hole section closer to the first principal surface along the opening edge and that extends so as to become wider from the opening edge in a direction opposite to the predetermined direction, and
a third hole section that is located in a position closer to the first principal surface of the seedbed part in the seedling part than the extended section and that is connected to the extended section, and
a hole width of the third hole section is constant in the predetermined direction.

6. The seedling mat according to any one of claim 1 to claim 5, further comprising:
a first through-hole section connected to the second hole section, wherein
the first through-hole section extends to the second principal surface of the seedbed part.

7. The seedling mat according to any one of claim 1 to claim 6, further comprising:
a depression section located in a position different from the plurality of seeding hole parts in the seedbed part, wherein
the depression section is recessed relative to the first principal surface of the seedbed part.

8. The seedling mat according to claim 7, wherein the depression section extends from one edge of the seedbed part to the other edge along the first principal surface of the seedbed part.

9. The seedling mat according to claim 7 or claim 8, wherein a depth of the depression section relative to the first principal surface of the seedbed part is deeper than a depth of the seeding hole part relative to the first principal surface of the seedbed part.

10. The seedling mat according to any one of claim 7 to claim 9, further comprising:
a second through-hole section connected to the depression section, wherein
the second through-hole section extends to the second principal surface of the seedbed part.

11. The seedling mat according to any one of claims 1 to 10, wherein the second hole section is line symmetrical about an axis of symmetry that is parallel to the predetermined direction.
